# EUROPEAN PATENT APPLICATION

(11) **EP 4 539 174 A1**
(43) Date of publication of application: **16.04.2025**
(21) Application number: 24200498.4
(22) Date of filing: 16.09.2024
(51) Int. Cl.: H01M 8/0258, H01M 8/0286, H01M 8/2483

(54) **INTERNALLY MANIFOLDED INTERCONNECTS AND ELECTROCHEMICAL CELL COLUMN INCLUDING SAME**

(30) Priority: 06.10.2023 US 202363588434 P
(71) Applicant: Bloom Energy Corporation, San Jose, CA 95134 (US)
(72) Inventor: GASDA, Michael, San Jose, 95134 (US); FOLKMAN, Chad, San Jose, 95134 (US); LIN, Cheng-Yu, San Jose, 95134 (US); SCHMAUSS, Travis A., San Jose, 95134 (US); LU, Zigui, San Jose, 95134 (US); LU, Haomin, San Jose, 95134 (US); SOMASUNDARAM, Prabu, San Jose, 95134 (US); BASU, Nilanjana, San Jose, 95134 (US); RAMAN, Annamalai, San Jose, 95134 (US)
(74) Representative: Wichmann, Hendrik

(57) **Abstract**

An interconnect for an electrochemical stack includes at least one of alternating air channel ribs of different length, seal gutters recessed relative to a perimeter seal surface on a fuel side of the interconnect, or fuel inlet and outlet plenums which extend perpendicular to fuel channels.

## Description

### FIELD

The embodiments of the present disclosure are generally directed to electrochemical cell column components and more specifically to interconnects which are internally manifolded for fuel.

### BACKGROUND

In a high temperature fuel cell system, such as a solid oxide fuel cell (SOFC) system, an oxidizing flow is passed through the cathode side of the fuel cell while a fuel flow is passed through the anode side of the fuel cell. The oxidizing flow is typically air, while the fuel flow can be a hydrocarbon fuel, such as methane, natural gas, pentane, ethanol, or methanol, or a non-hydrocarbon fuel such as ammonia or pure hydrogen. The fuel cell, operating at a typical temperature between 750°C and 950°C, enables the transport of negatively charged oxygen ions from the cathode flow stream to the anode flow stream, where the ions combine with either free hydrogen or hydrogen in a hydrocarbon molecule to form water vapor and/or with carbon monoxide to form carbon dioxide. The excess electrons from the negatively charged ions are routed back to the cathode side of the fuel cell through an electrical circuit completed between anode and cathode, resulting in an electrical current flow through the circuit.

Fuel cell stacks may be either internally or externally manifolded for fuel and air. In internally manifolded stacks, the fuel and/or air are distributed to each cell using risers contained within the stack. In other words, the gas flows through openings or holes in the supporting layer of each fuel cell, such as the electrolyte layer, and gas flow separator of each cell. In externally manifolded stacks, the stack is open on the fuel and air inlet and outlet sides, and the fuel and air are introduced and collected independently of the stack hardware. For example, the inlet and outlet fuel and air flow in separate channels between the stack and the manifold housing in which the stack is located.

Fuel cell stacks are frequently built from a multiplicity of cells in the form of planar elements, tubes, or other geometries. Fuel and air have to be provided to electrochemically active surfaces, which can be large. One component of a fuel cell stack is the so called gas flow separator (referred to as a gas flow separator plate in a planar stack) that separates the individual cells in the stack. The gas flow separator plate separates fuel, such as hydrogen or a hydrocarbon fuel, flowing to the fuel electrode (i.e., anode) of one cell in the stack from oxidant, such as air, flowing to the air electrode (i.e., cathode) of an adjacent cell in the stack. Frequently, the gas flow separator plate is also used as an interconnect which electrically connects the fuel electrode of one cell to the air electrode of the adjacent cell. When used as an interconnect, the gas flow separator plate is made of or contains an electrically conductive material.

### SUMMARY

According to various embodiments of the present disclosure, an interconnect for an electrochemical stack includes at least one of alternating air channel ribs of different length, seal gutters recessed relative to a perimeter seal surface on a fuel side of the interconnect, or fuel inlet and outlet plenums which extend perpendicular to fuel channels.

In one embodiment, an interconnect for an electrochemical cell column comprises an air side and an opposing fuel side; opposing first and second peripheral edges; opposing third and fourth peripheral edges; fuel inlets that extend through the interconnect from the air side to the fuel side; fuel outlets that extend through the interconnect from the air side to the fuel side; a fuel flow field located on the fuel side; and an air flow field located on the air side. The air flow field comprises first ribs that extend in a first direction, from the first peripheral edge to the second peripheral edge; second ribs that are located between the first ribs and that have opposing ends that are recessed from the first and second peripheral edges, such that a length of the second ribs is less than a length of the first ribs; and air channels that are at least partially defined by the first and second ribs.

In another embodiment, an interconnect for an electrochemical cell column comprises an air side and an opposing fuel side; opposing first and second peripheral edges; opposing third and fourth peripheral edges; fuel inlets that extend through the interconnect from the air side to the fuel side; fuel outlets that extend through the interconnect from the air side to the fuel side; a fuel flow field located on the fuel side; an air flow field located on the air side; riser seal surfaces that are located on the air side on opposing sides of the air flow field and surround the fuel inlets and the fuel outlets; a perimeter seal surface that is located on the fuel side and surrounds the fuel flow field and the fuel inlets and the fuel outlets; and seal gutters on the fuel side that extend along the first and second peripheral edges and are configured to receive overflow seal material. The perimeter seal surface is located between the fuel flow field and the seal gutters, and the seal gutters are recessed relative to the perimeter seal surface.

In yet another embodiment, an interconnect for an electrochemical cell column comprises an air side and an opposing fuel side; opposing first and second peripheral edges; opposing third and fourth peripheral edges; fuel inlets and fuel outlets that extend through the interconnect from the air side to the fuel side, wherein the fuel inlets and the fuel outlets comprise a first pair of a first fuel inlet and a first fuel outlet that are located adjacent to the third peripheral edge, and a second pair of a second fuel inlet and a second fuel outlet that are located adjacent to the fourth peripheral edge; an air flow field located on the air side and comprising air channels which extend in a first direction; fuel flow field located on the fuel side and comprising fuel channels which extend in the first direction; a fuel inlet plenum that is located on the fuel side adjacent to the second peripheral edge, extends in a second direction perpendicular to the first direction, and fluidly connects the fuel inlets to the fuel channels; and a fuel outlet plenum that is located on the fuel side adjacent to the first peripheral edge, extends in the second direction, and fluidly connects the fuel outlets to the fuel channels.

### BRIEF DESCRIPTION OF THE DRAWINGS

The accompanying drawings, which are incorporated herein and constitute part of this specification, illustrate example embodiments of the invention, and together with the general description given above and the detailed description given below, serve to explain the features of the invention.
FIG. 1A is a perspective view of a conventional fuel cell column, FIG. 1B is a perspective view of one counter-flow solid oxide fuel cell (SOFC) stack included in the column of FIG. 1A, and FIG. 1C is a side cross-sectional view of a portion of the stack of FIG. 1B.
FIG. 2A is a top view of the air side of a conventional interconnect of the stack of FIG. 1B, and FIG. 2B is a top view of the fuel side of the conventional interconnect.
FIG. 3A is a perspective view of a fuel cell stack, according to various embodiments of the present disclosure, FIG. 3B is an exploded perspective view of a portion of the stack of FIG. 3A, FIG. 3C is a top view of the fuel side of an interconnect included in the stack of FIG. 3A, and FIG. 3D is a schematic view of a fuel cell included in the stack of FIG. 3A.

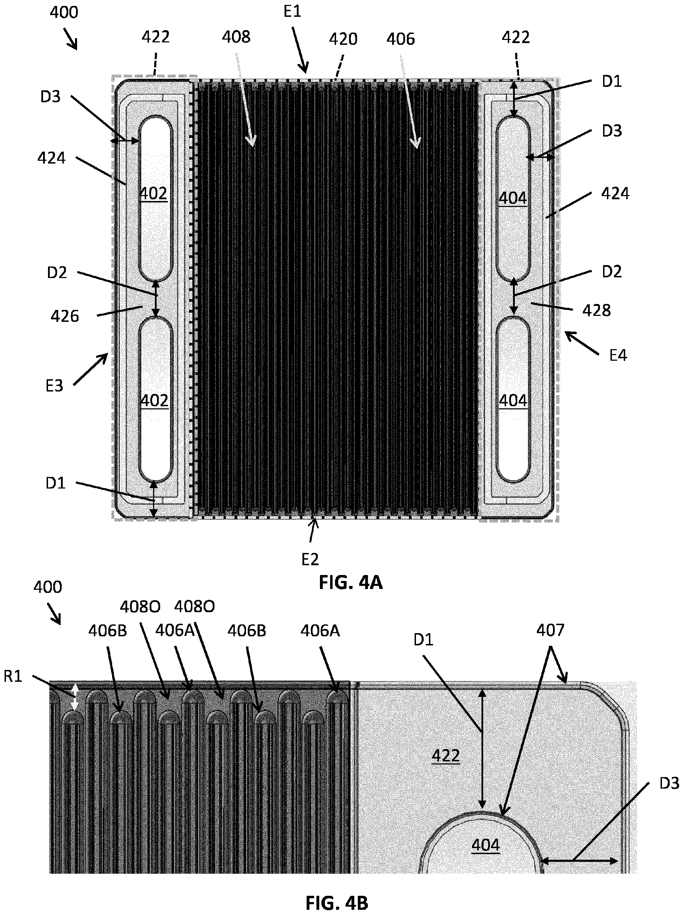

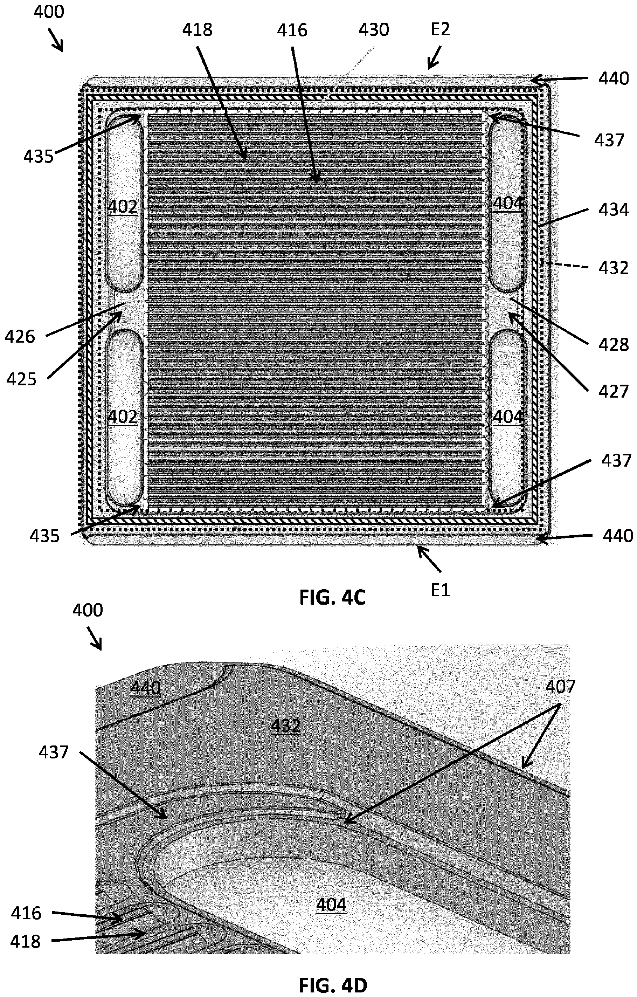

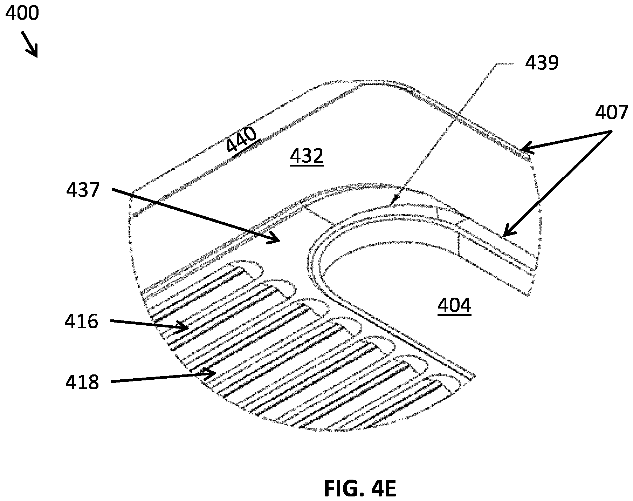

FIG. 4A is a plan view showing an air side of a crossflow interconnect and riser seals disposed thereon, according to various embodiments of the present disclosure. FIG. 4B is a plan view of an enlarged portion of FIG. 4A. FIG. 4C is a plan view showing a fuel side of the crossflow interconnect and a perimeter seal disposed thereon, according to various embodiments of the present disclosure. FIG. 4D is a perspective view showing an enlarged portion of FIG. 4C. FIG. 4E is a perspective view showing an enlarged portion of FIG. 4C including an additional feature that may be included in the interconnect of FIGS. 4A-4D.
FIG. 5A is a cross sectional view of an electrochemical cell column including interconnects of FIGS. 4A-4E and electrochemical cells, as assembled in the cell column of FIG. 3A and taken perpendicular to the fuel channels, according to various embodiments of the present disclosure. FIG. 5B is a top view showing the overlap of a fuel cell and seals on the fuel side of an interconnect of FIG. 5A.
FIG. 6A is an air side view of an alternative counterflow interconnect, according to various embodiments of the present disclosure. FIG. 6B is a fuel side view of the interconnect of FIG. 6A.
FIG. 7 is a cross sectional view of an electrochemical cell column including interconnects of FIGS. 6A and 6B, according to various embodiments of the present disclosure.

### DETAILED DESCRIPTION

As set forth herein, various aspects of the disclosure are described with reference to the exemplary embodiments and/or the accompanying drawings in which exemplary embodiments of the invention are illustrated. This invention may, however, be embodied in many different forms and should not be construed as limited to the exemplary embodiments shown in the drawings or described herein. It will be appreciated that the various disclosed embodiments may involve particular features, elements or steps that are described in connection with that particular embodiment. It will also be appreciated that a particular feature, element or step, although described in relation to one particular embodiment, may be interchanged or combined with alternate embodiments in various non-illustrated combinations or permutations.

The various embodiments will be described in detail with reference to the accompanying drawings. Wherever possible, the same reference numbers will be used throughout the drawings to refer to the same or like parts. References made to particular examples and implementations are for illustrative purposes and are not intended to limit the scope of the invention or the claims.

Ranges can be expressed herein as from "about" one particular value, and/or to "about" another particular value. When such a range is expressed, examples include from the one particular value and/or to the other particular value. Similarly, when values are expressed as approximations, by use of the antecedent "about" or "substantially" it will be understood that the particular value forms another aspect. In some embodiments, a value of "about X" may include values of +/- 1 % X. It will be further understood that the endpoints of each of the ranges are significant both in relation to the other endpoint, and independently of the other endpoint.

Electrochemical cell systems include fuel cell and electrolyzer cell systems. In a high temperature fuel cell system, such as a solid oxide fuel cell (SOFC) system, an oxidizing flow is directed to the cathode side of the fuel cell while a fuel flow is directed to the anode side of the fuel cell. The oxidizing flow is typically air, while the fuel flow can be hydrogen (H₂) or a hydrocarbon fuel, such as methane, natural gas, ethanol, or methanol, or a hydrogen containing fuel such as ammonia. The fuel cell, operating at a typical temperature between 750°C and 950°C, enables the transport of negatively charged oxygen ions from the cathode flow stream to the anode flow stream, where the ions combine with either free hydrogen or hydrogen in a hydrocarbon molecule to form water vapor and/or with carbon monoxide to form carbon dioxide. The excess electrons from the negatively charged ions are routed back to the cathode side of the fuel cell through an electrical circuit completed between anode and cathode, resulting in an electrical current flow through the circuit.

In an electrolyzer system, such as a solid oxide electrolyzer system (SOEC), water (e.g., steam) is separated into hydrogen and oxygen by applying a voltage across the electrolyzer cells. In the SOEC stack, the anode is the air electrode and the cathode is the fuel electrode. Thus, the electrode to which the fuel (e.g., hydrogen or hydrocarbon fuel in a SOFC, and water in a SOEC) is supplied may be referred to as the fuel electrode and the opposing electrode may be referred to as the air electrode in both SOFC and SOEC cells.

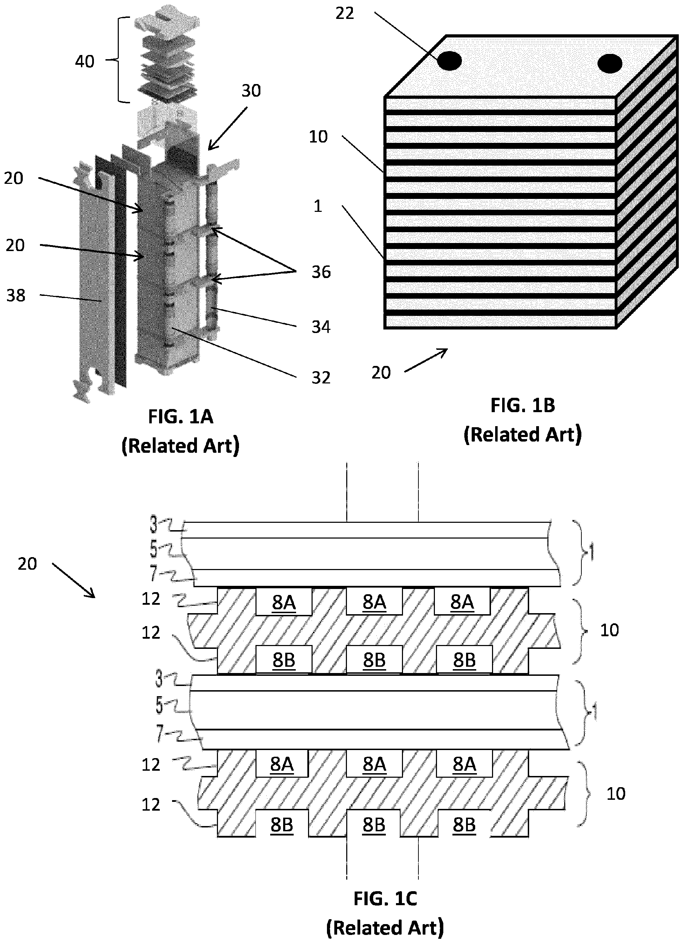

FIG. 1A is a perspective view of a conventional fuel cell column 30, FIG. 1B is a perspective view of one counter-flow solid oxide fuel cell (SOFC) stack 20 included in the column 30 of FIG. 1A, and FIG. 1C is a side cross-sectional view of a portion of the stack 20 of FIG. 1B.

Referring to FIGS. 1A and 1B, the column 30 may include one or more electrochemical cell stacks 20, a fuel inlet conduit 32, an anode exhaust conduit 34, and anode feed/return assemblies 36 (e.g., anode splitter plates (ASPs) 36). The column 30 may also include side baffles 38 and a compression assembly 40. The fuel inlet conduit 32 is fluidly connected to ASPs 36 and is configured to provide the fuel feed to each ASP 36, and anode exhaust conduit 34 is fluidly connected to ASPs 36 and is configured to receive anode fuel exhaust from each ASP 36.

The ASPs 36 are disposed between the stacks 20 and are configured to provide a hydrocarbon fuel or hydrogen containing fuel feed to the stacks 20 and to receive anode fuel exhaust from the stacks 20. For example, the ASPs 36 may be fluidly connected to internal fuel riser channels 22 formed in the stacks 20, as discussed below.

Referring to FIG. 1C, the stack 20 includes multiple fuel cells 1 that are separated by interconnects 10, which may also be referred to as gas flow separator plates or bipolar plates. Each fuel cell 1 includes a cathode electrode 3, a solid oxide electrolyte 5, and an anode electrode 7.

Each interconnect 10 electrically connects adjacent fuel cells 1 in the stack 20. In particular, an interconnect 10 may electrically connect the anode electrode 7 of one fuel cell 1 to the cathode electrode 3 of an adjacent fuel cell 1. FIG. 1C shows that the lower fuel cell 1 is located between two interconnects 10.

Each interconnect 10 includes ribs 12 that at least partially define fuel channels 8A and air channels 8B. The interconnect 10 may operate as a gas-fuel separator that separates a fuel, such as a hydrocarbon fuel, flowing to the fuel electrode (i.e. anode 7) of one cell in the stack from oxidant, such as air, flowing to the air electrode (i.e. cathode 3) of an adjacent cell in the stack. At either end of the stack 20, there may be an air end plate or fuel end plate (not shown) for providing air or fuel, respectively, to the end electrode in the stack.

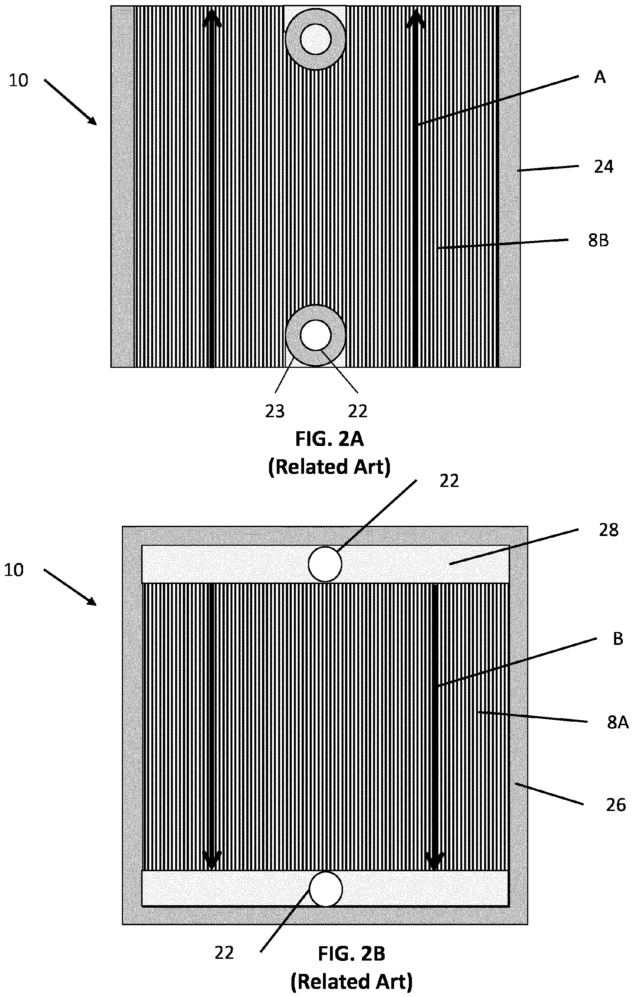

FIG. 2A is a top view of the air side of a conventional interconnect 10, and FIG. 2B is a top view of a fuel side of the interconnect 10. Referring to FIGS. 1C and 2A, the air side includes the air channels 8B. Air flows through the air channels 8B to a cathode electrode 3 of an adjacent fuel cell 1. In particular, the air may flow across the interconnect 10 in a first direction A as indicated by the arrows.

Ring seals 23 may surround fuel holes 22 of the interconnect 10, to prevent fuel from contacting the cathode electrode. Peripheral strip-shaped seals 24 are located on peripheral portions of the air side of the interconnect 10. The seals 23, 24 may be formed of a glass material. The peripheral portions may be in the form of an elevated plateau which does not include ribs or channels. The surface of the peripheral regions may be coplanar with tops of the ribs 12.

Referring to FIGS. 1C and 2B, the fuel side of the interconnect 10 may include the fuel channels 8A and fuel manifolds 28 (e.g., fuel plenums). Fuel flows from one of the fuel holes 22, into the adjacent manifold 28, through the fuel channels 8A, and to an anode 7 of an adjacent fuel cell 1. Excess fuel may flow into the other fuel manifold 28 and then into the adjacent fuel hole 22. In particular, the fuel may flow across the interconnect 10 in a second direction B, as indicated by the arrows. The second direction B may be opposite to the first direction A (see FIG. 2A) referred to as a counter-flow design, perpendicular to the first direction A referred to as a cross-flow design, or in the same direction as first direction A referred to as co-flow design.

A frame-shaped seal 26 is disposed on a peripheral region of the fuel side of the interconnect 10. The peripheral region may be an elevated plateau which does not include ribs or channels. The surface of the peripheral region may be coplanar with tops of the ribs 12.

Accordingly, a conventional counter-flow fuel cell column, as shown in FIGS 1A, 1B, 1C, 2A, and 2B, may include complex fuel distribution systems (fuel rails and anode splitter plates). In addition, the use of an internal fuel riser may require holes in fuel cells and corresponding seals, which may reduce the active areas of the fuel cells 1 and may cause cracks in the ceramic electrolytes of the fuel cells 1.

The fuel manifolds 28 may occupy a relatively large region of the interconnect 10, which may reduce the contact area between the interconnect 10 and an adjacent fuel cell by approximately 10%. The fuel manifolds 28 are also relatively deep, such that the fuel manifolds 28 represent relatively thin regions of the interconnect 10. If the interconnect 10 is formed by a powder metallurgy compaction process, the density of the fuel manifold regions may approach the theoretical density limit of the interconnect material. As such, the length of stroke of a compaction press used in the compaction process may be limited due to the high-density fuel manifold regions being incapable of being compacted further. As a result, the density achieved elsewhere in the interconnect 10 may be limited to a lower level by the limitation to the compaction stroke. The resultant density variation may lead to topographical variations, which may reduce the amount of contact between the interconnect 10 and fuel cell 1 and may result in lower stack yield and/or performance.

Another important consideration in fuel cell system design is in the area of operational efficiency. Maximizing fuel utilization is a key factor to achieving operational efficiency. Fuel utilization is the ratio of how much fuel is consumed during operation, relative to how much is delivered to a fuel cell. An important factor in preserving fuel cell cycle life may be avoiding fuel starvation in fuel cell active areas, by appropriately distributing fuel to the active areas. If there is a maldistribution of fuel such that some flow field channels receive insufficient fuel to support the electrochemical reaction that would occur in the region of that channel, it may result in fuel starvation in fuel cell areas adjacent that channel. In order to distribute fuel more uniformly, conventional interconnect designs include channel depth variations across the flow field. This may create complications not only in the manufacturing process but may also require complex metrology to measure these dimensions accurately. The varying channel geometry may be constrained by the way fuel is distributed through fuel holes and distribution manifolds.

One possible solution to eliminate this complicated geometry and the fuel manifold is to have a wider fuel opening to ensure much more uniform fuel distribution across the fuel flow field. Since fuel manifold formation is a factor in density variation, elimination of fuel manifolds should enable more uniform interconnect density and permeability. Accordingly, there is a need for improved interconnects that provide for uniform contact with fuel cells, while also uniformly distributing fuel to the fuel cells. There is also a need for improved interconnects designed to maximize fuel utilization and fuel cell active area without increasing the footprint of a hotbox.

### Internally Manifolded Electrochemical Cell Systems

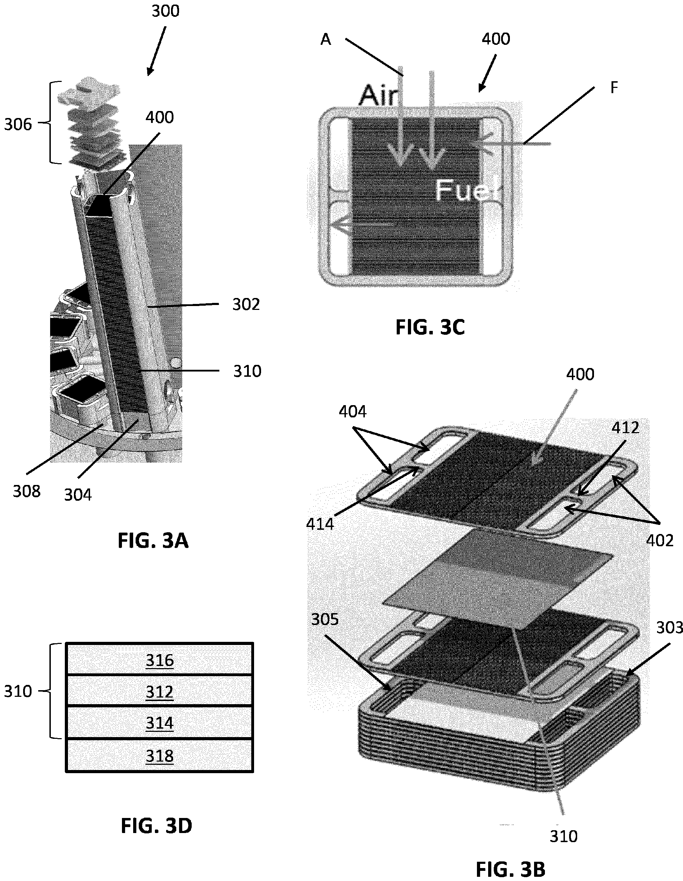

FIG. 3A is a perspective view of an internally manifolded electrochemical cell column 300, according to various embodiments of the present disclosure, FIG. 3B is an exploded perspective view of a portion of the column 300 of FIG. 3A, FIG. 3C is a top view of the fuel side of an interconnect 400 included in the column 300, and FIG. 3D is a schematic view of a fuel cell included in the column 300.

Referring to FIGS. 3A-3D, the cell column 300, which may also be referred to as a fuel cell stack because it lacks ASPs, includes multiple electrochemical cells 310 (e.g., fuel cells or electrolyzer cells) that are separated by interconnects 400, which may also be referred to as gas flow separator plates or bipolar plates. One or more stacks 300 may be thermally integrated with other components of a fuel cell power generating system (e.g., one or more anode tail gas oxidizers, fuel reformers, fluid conduits and manifolds, etc.) in a common enclosure or "hotbox."

The interconnects 400 are made from an electrically conductive metal material. For example, the interconnects 400 may comprise a chromium alloy, such as a Cr-Fe alloy. The interconnects 400 may be fabricated using a powder metallurgy technique that includes pressing and sintering a Cr-Fe powder, which may be a mixture of Cr and Fe powders or a Cr-Fe alloy powder, to form a Cr-Fe interconnect in a desired size and shape (e.g., a "net shape" or "near net shape" process). A typical chromium-alloy interconnect 400 comprises more than about 90% chromium by weight, such as about 94-96% (e.g., 95%) chromium by weight. An interconnect 400 may also contain less than about 10% iron by weight, such as about 4-6% (e.g., 5%) iron by weight, may contain less than about 2% by weight, such as about zero to 1% by weight, of other materials, such as yttrium or yttria, as well as residual or unavoidable impurities.

Each electrochemical cell 310, such as a fuel cell, may include a solid oxide electrolyte 312, an anode 314, and a cathode 316. While the electrochemical cells 310 are described as fuel cells below for brevity, it should be understood that the electrochemical cells 310 may be electrolyzer cells in alternative embodiments. In some embodiments, the anode 314 and the cathode 316 may be printed on the electrolyte 312. In other embodiments, a conductive layer 318, such as a nickel mesh, may be disposed between the anode 314 and an adjacent interconnect 400. The fuel cell 310 does not include through holes, such as the fuel holes of conventional fuel cells. Therefore, the fuel cell 310 avoids cracks that may be generated due to the presence of such though holes.

An upper most interconnect 400 and a lowermost interconnect 400 of the column 300 may be different ones of an air end plate or fuel end plate including features for providing air or fuel, respectively, to an adjacent end fuel cell 310. As used herein, an "interconnect" may refer to either an interconnect located between two fuel cells 310 or an end plate located at an end of the stack and directly adjacent to only one fuel cell 310. Since the column 300 does not include ASPs and the end plates associated therewith, the column 300 may include only two end plates. As a result, stack dimensional variations associated with the use of intra-column ASPs may be avoided.

The column 300 may include side baffles 302, a fuel plenum 304, and a compression assembly 306. The side baffles 302 may be formed of a ceramic material and may be disposed on opposing sides of the cell column 300 containing stacked fuel cells 310 and interconnects 400. The side baffles 302 may connect the fuel plenum 304 and the compression assembly 306, such that the compression assembly 306 may apply pressure to the column 300. The side baffles 302 may be curved baffle plates, such that each baffle plate covers at least portions of three sides of the cell column 300. For example, one baffle plate may fully cover the fuel inlet riser side of the column 300 and partially cover the adjacent front and back sides of the stack, while the other baffle plate fully may cover the fuel outlet riser side of the stack and partially cover the adjacent portions of the front and back sides of the stack. The remaining uncovered portions for the front and back sides of the stack allow the air to flow through the column 300. The curved baffle plates provide an improved air flow control through the stack compared to the conventional baffle plates 38 which cover only one side of the stack. The fuel plenum 304 may be disposed below the column 300 and may be configured to provide a hydrogen-containing fuel feed to the column 300 and may receive an anode fuel exhaust from the column 300. The fuel plenum 304 may be connected to fuel inlet and outlet conduits 308 which are located below the fuel plenum 304.

Each interconnect 400 electrically connects adjacent fuel cells 310 in the column 300. In particular, an interconnect 400 may electrically connect the anode electrode 314 of one fuel cell 310 to the cathode electrode 316 of an adjacent fuel cell 310. As shown in FIG. 3C, each interconnect 400 may be configured to channel air in a first direction A, such that the air may be provided to the cathode of an adjacent fuel cell 310. Each interconnect 400 may also be configured to channel fuel in a second direction F, such that the fuel may be provided to the anode of an adjacent fuel cell 310. Directions A and F may be perpendicular, or substantially perpendicular. As such, the interconnects 400 may be referred to as crossflow interconnects.

The interconnect 400 may include through-holes configured for fuel distribution. For example, the interconnects 400 may include one or more fuel inlets 402 and one or more fuel outlets 404, which may also be referred to as anode exhaust outlets 404. The fuel inlets and outlets 402, 404 may be disposed outside of the perimeter of the fuel cells 310. As such, the fuel cells 310 may be formed without corresponding through holes for fuel flow. The combined length of the fuel inlets 402 and/or the combined length of the fuel outlets 404 may be at least 75% of a corresponding length of the interconnect 400 e.g., a length taken in direction A.

In one embodiment, each interconnect 400 contains two fuel inlets 402 separated by a neck portion 412 of the interconnect 400, as shown in FIG. 3B. However, more than two fuel inlets 402 may be included, such as three to five inlets separated by two to four neck portions. In one embodiment, each interconnect 400 contains two fuel outlets 404 separated by a neck portion 414 of the interconnect 400, as shown in FIG. 3B. However, more than two fuel outlets 404 may be included, such as three to five outlets separated by two to four neck portions 414.

The fuel inlets 402 of adjacent interconnects 400 may be aligned in the column 300 to form one or more fuel inlet risers 303. The fuel outlets 404 of adjacent interconnects 400 may be aligned in the column 300 to form one or more fuel outlet risers 305. The fuel inlet riser 303 may be configured to distribute fuel received from the fuel plenum 304 to the fuel cells 310. The fuel outlet riser 305 may be configured to provide anode exhaust received from the fuel cells 310 to the fuel plenum 304.

The side baffles 302 may optionally be curved around edges of the interconnects 400. In particular, the side baffles 302 may be disposed around the fuel inlets 402 and outlets 404 of the interconnects 400. Accordingly, the side baffles may more efficiently control air flow through air channels of the interconnects 400, which are exposed between the side baffles 302 and are described in detail with regard to FIGS. 4A and 4B,

In various embodiments, the column 300 may include from about 200 to 400 fuel cells, such as about 250 to 350 fuel cells, more particularly from about 275 to 325 fuel cells, which may be provided with fuel using only the fuel risers 303, 305. In other words, as compared to a conventional fuel cell system, the crossflow configuration allows for a large number of fuel cells to be provided with fuel, without the need for ASPs or external stack fuel manifolds, such as external conduits 32, 34 shown in FIG. 1A.

Each interconnect 400 may be made of or may contain electrically conductive material, such as a metal alloy (e.g., chromium-iron alloy) which has a similar coefficient of thermal expansion to that of the solid oxide electrolyte in the cells (e.g., a difference of 0-10%). For example, the interconnects 400 may comprise a metal (e.g., a chromium-iron alloy, such as 4-6 weight percent iron, optionally 1 or less weight percent yttrium and balance chromium alloy), and may electrically connect the anode 314 or fuel-side of one fuel cell 310 to the cathode 316or air-side of an adjacent fuel cell 310. An electrically conductive contact layer, such as a nickel contact layer 318 (e.g., a nickel mesh), may be provided between anode 314 and each interconnect 400. Another optional electrically conductive contact layer may be provided between the cathode electrodes and each interconnect 400.

A surface of an interconnect 400 that in operation is exposed to an oxidizing environment (e.g., air), such as the cathode-facing side of the interconnect 400, may be coated with a protective coating layer in order to decrease the growth rate of a chromium oxide surface layer on the interconnect and to suppress evaporation of chromium vapor species which can poison the fuel cell cathode. Typically, the coating layer, which can comprise a perovskite such as lanthanum strontium manganite (LSM), may be formed using a spray coating or dip coating process. Alternatively, other metal oxide coatings, such as a spinel, such as an (Mn, Co)₃O₄ spinel (MCO), can be used instead of or in addition to LSM. Any spinel having the composition Mn₂₋ₓCo₁₊ₓO₄ (0 ≤ x ≤ 1) or written as z(Mn₃O₄) + (1-z)(Co₃O₄), where (1/3 ≤ z ≤ 2/3) or written as (Mn, Co)₃O₄ may be used. In other embodiments, a mixed layer of LSM and MCO, or a stack of LSM and MCO layers may be used as the coating layer.

Referring to FIGS. 4A, and 4B, the air side of the interconnect 400 may include air ribs 406 configured to at least partially define air channels 408 that are configured to provide air to the cathode of a fuel cell 310 facing the air ribs 406. The air side of the interconnect 400 may be divided into an air flow field 420 including the air channels 408, and riser seal surfaces 422 disposed on two opposing sides of the air flow field 420. One of the riser seal surfaces 422 may surround plural fuel inlets 402 and the other riser seal surface 422 may surround plural fuel outlets 404. While two fuel inlets 402 and two fuel outlets 404 are shown in FIG. 4A, the interconnect 400 may include three or more fuel inlets 402 and three or more fuel outlets 404.

The air ribs 406 may include first ribs 406A and second ribs 406B. The first ribs 406A may extend completely across the air side of the interconnect 400, such that the first ribs 406A terminate near opposing peripheral first and second edges E1, E2 of the interconnect 400. Therefore, the column 300 may be externally manifolded for air. The second ribs 406B may be disposed between the first ribs 406A and may be shorter than the first ribs 406A. Thus, the first ribs 406A and second ribs 406B may alternate in a direction perpendicular to the direction between the first edge E1 and the second edge E2. In one embodiment, the first ribs 406A and the second ribs 406B extend in a straight line only in the direction parallel to the direction between the first edge E1 and the second edge E2.

In particular, opposing ends of the second ribs 406B may be recessed from the peripheral edges E1 and E2 of the interconnect 400 by a distance R1 ranging from about 0.25 to about 3 mm, such as from about 0.5 to about 2 mm, from about 0.75 to about 1.5 mm, or from about 1 to about 1.25 mm. Thus, the second ribs 406B are shorter than the first ribs 406A by two times the distance R1. When assembled into a stack, the recessing of the second ribs 406B may result in the formation of enlarged air channel openings 408O that increase the flow of ambient air into and out of the air channels 408, as compared to air channels formed without recessed second ribs 406B.

Riser seals 424 may be disposed on the riser seal surfaces 422. For example, one riser seal 424 may surround the fuel inlets 402, and one riser seal 424 may surround the fuel outlets 404. The riser seals 424 may prevent fuel and/or anode exhaust from entering the air flow field 420 and contacting the cathode of an adjacent fuel cell 310. The riser seals 424 may also operate to prevent fuel from leaking out of a cell column 300 shown in FIG. 3A.

The fuel inlets 402 and the fuel outlets 404 are elongated in a direction parallel to edges E3 and E4, and each have two shorter sides and two longer sides. Opposing shorter sides of the fuel inlets 402 and the fuel outlets 404 may have a constant radius of curvature (e.g., are semicircular) in order to reduce the accumulation of stress and possible cracking. The opposing longer sides of the fuel inlets 402 and the fuel outlets 404 may be straight. The fuel inlets 402 are separated from each other by first bridge portion 426 of the interconnect 400. The fuel outlets 404 are separated from each other by second bridge portion 428 of the interconnect 400.

In some embodiments, a minimum distance D1 between the fuel inlets and outlets 402, 404 and the adjacent respective first and second peripheral edges E1, E2 may be larger than in the interconnect 400 shown in FIG. 3B. For example, distance D1 may range from about 6 to about 9 mm, such as from about 7 to about 8 mm. A minimum distance D2 of the bridge regions 426 and 428 between the adjacent fuel inlets 402 and between the adjacent fuel outlets 404 may also be larger than in the interconnect 400 shown in FIG. 3B. In one embodiment, distance D2 may be less than distance D1. For example, the distance D2 may range from about 4.5 mm to about 7.5 mm, such as from about 5 mm to about 6 mm. The interconnect 400 also includes third and fourth edges E3, E4 which extend perpendicular to the first and the second edges E1, E2. A minimum distance D3 between the inlets 402 and the adjacent third peripheral edge E3 and between the outlets 404 and the adjacent fourth peripheral edge E4 may be larger than in the interconnect 400 shown in FIG. 3B. For example, the distance D3 may be less than or equal to the distance D1. The relatively large distances D1 and/or D3 are configured to strengthen corner regions of the interconnect 400, and thereby resist damage (e.g., cracking) during thermal cycling. They also provide a larger seal 424 landing area and provide a wider process window for seal 424 deposition. The relatively large distance D2 is configured to strengthen bridge portions 426, 428 in order to reduce and/or prevent cracks during thermal cycling.

In one embodiment shown in FIG. 4B, a chamfer 407 may be added to the fuel inlets 402 and/or the fuel outlets 404 on the air side of the interconnect 400. The chamfer 407 may operate to capture seal material that has escaped from the riser seal surface 422. Chamfers 407 may also be added to other edges of the interconnect 400, such as edges of the inlets and outlets 402, 404 on the fuel side of the interconnect 400 as shown in FIG. 4D, and/or perimeter edges of the interconnect 400, for example. The chamfers 407 may also provide benefits during formation of the interconnect 400, such as preventing chipping during powdered metallurgy operations used to form the interconnect 400.

Referring to FIGS. 4C and 4D, the fuel side of the interconnect 400 may include fuel ribs 416 that at least partially define fuel channels 418 configured to provide fuel to the anode of a fuel cell 310 disposed thereon. The fuel side of the interconnect 400 may be divided into a fuel flow field 430 including the fuel channels 418, and a perimeter seal surface 432 surrounding the fuel flow field 430 and the fuel inlets and outlets 402, 404. The fuel ribs 416 and fuel channels 418 may extend in a direction that is perpendicular or substantially perpendicular to the direction in which the air channels 408 and air ribs 406 extend to provide a crossflow interconnect 400.

A frame-shaped perimeter seal 434 may be disposed on the perimeter seal surface 432. The perimeter seal 434 may be configured to prevent air entering the fuel flow field 430 and contacting the anode of an adjacent fuel cell 310, when assembled in a fuel cell stack or column. The perimeter seal 434 may also operate to prevent fuel from exiting the fuel risers 303, 305 shown in FIG. 3B and leaking out of the cell column 300 shown in FIG. 3A. In one embodiment, the perimeter seal 434 may be wider than the riser seals 424 to provide less stress at the corners of the fuel cell 310, which decreases the chance of cracking of the fuel cell 310. In one embodiment, the perimeter seal 434 may be 5 to 50 percent wider, such as 10 to 20 percent wider than the riser seals 424.

The fuel side of the interconnect 400 may include central plenums 425, 427 in the respective bridge portions 426, 428. The central plenums 425, 427 may be recessed with respect to the perimeter seal surface 432. For example, the central plenums 425, 427 may be recessed by from about 50 µm to about 3000 µm, such as from about 100 µm to about 2000 µm, with respect to the surface of the perimeter seal surface 432. In some embodiments, the surfaces of the central plenums 425, 427 may be coplanar with bottom surfaces of some fuel channels 418. Accordingly, the central plenums 425, 427 may be configured to improve fuel distribution uniformity by increasing fuel flow through fuel channels 418 at the center of the fuel flow field 430.

The interconnect 400 may include respective corner plenums 435, 437 that extend from corners of the fuel flow field 430 to the adjacent fuel inlets and outlets 402, 404, respectively. The respective corner plenums 435, 437 may be disposed between the fuel inlets and outlets 402, 404 and the adjacent first and second edges E1, E2. The surfaces of the corner plenums 435, 437 may be recessed below the surface of the perimeter seal surface 432 and may be coplanar with the bottoms of some fuel channels 418 and/or the central plenums 425, 427. For example, the corner plenums 435, 437 may be recessed by from about 50 µm to about 3000 µm, such as from about 100 µm to about 2000 µm, with respect to the surface of the perimeter seal surface 432. In various embodiments, the corner plenums 435, 437 may be configured to improve fuel distribution uniformity by increasing fuel flow through peripheral fuel channels 418 adjacent to the first and second peripheral edges E1, E2. Furthermore, regions of the interconnect 400 below the corner plenums 435, 437 have a lower thickness (i.e., a thickness in the direction from the fuel side to the air side of the interconnect 400) than the portions of the interconnect 400 below the perimeter seal surface 432. When the interconnects are made by powder metallurgy, more powder is compressed into thinner regions than thicker regions if the starting metal powder is distributed evenly in the powder metallurgy die. Therefore, the thinner corner plenums 435, 437 have a higher density than thicker parts of the interconnect 400 when the interconnect is made by a powder metallurgy process. The higher density improves the strength in the corners of the interconnect 400 and reduces cracking.

As such, the fuel inlets 402 and the adjacent plenums 425, 435 may operate as a fuel distribution manifold. Likewise, the fuel outlets 404 and the adjacent plenums 427, 437 may operate as a fuel collection manifold (e.g., fuel exhaust collection manifold).

The interconnect 400 may include seal gutters 440 disposed outside of the perimeter seal surface 432. Thus, the perimeter seal surface 432 is located between the fuel flow field 430 and the seal gutters 440. The seal gutters 440 extend along the first and second peripheral edges E1, E2 of the interconnect 400. The seal gutters 440 may be recessed relative to the perimeter seal surface 432. In other words, the seal gutters 440 may be formed by locally reducing the thickness of the interconnect 400 adjacent to the first and second peripheral edges E1, E2. The seal gutters 440 are configured to receive excess perimeter seal 434 material as it squishes out laterally during column 300 sintering. "Sintering" includes processes for heating, melting and/or reflowing glass or glass-ceramic seal precursor materials to form seals in the column 300. The seal gutters 440 broaden the perimeter seal process window, allowing for more seal material to be placed on the perimeter seal surface 432 to ensure hermetic seal against the electrolyte surface, without squishing the peripheral seal overboard and clogging the air channel 408 inlets on the opposing air side of the interconnect 400.

In various embodiments, the cross-sectional area of the fuel channels 418 may increase as distance from the closest peripheral edge E1, E2 increases. In other words, each of the central fuel channels 418 that extend through a central portion of the fuel flow field 430 may have larger cross-sectional areas than each of the peripheral fuel channels 418 that extend through peripheral portions of the fuel flow field 430 adjacent to the peripheral edges E1, E2. The central fuel channel area may be greater than the peripheral channel area by 10 to 50 percent.

Referring to FIGS. 4A and 4C, the seals 424, 434 may comprise a glass or ceramic seal material. The seal material may have a low electrical conductivity. In some embodiments, the seals 424, 434 may be formed by printing one or more layers of seal material on the interconnect 400, followed by sintering the column.

Referring to FIG. 4E, in one embodiment, ramps 439 may be formed between the corner plenums 435, 437 and the fuel inlets 402 and outlets 404. The ramps 439 may comprise upwardly tapered end portions of the corner plenums 435, 437 which are sloped upwards toward the perimeter seal surface 432. The ramps 439 may facilitate compaction during a powder metallurgy process used to form the interconnect 400.

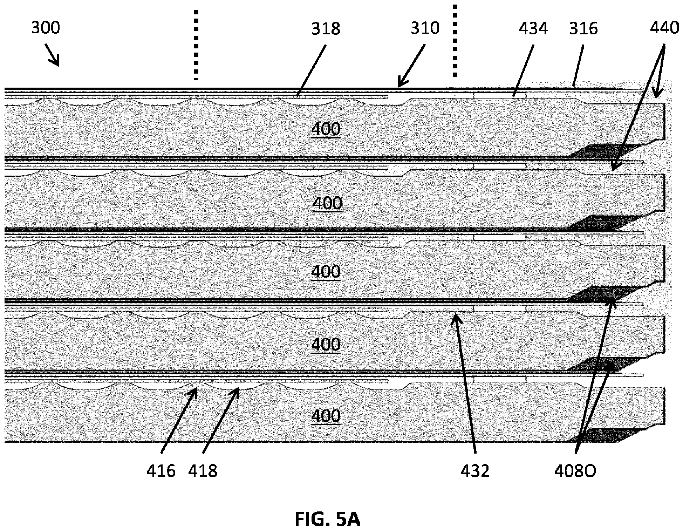

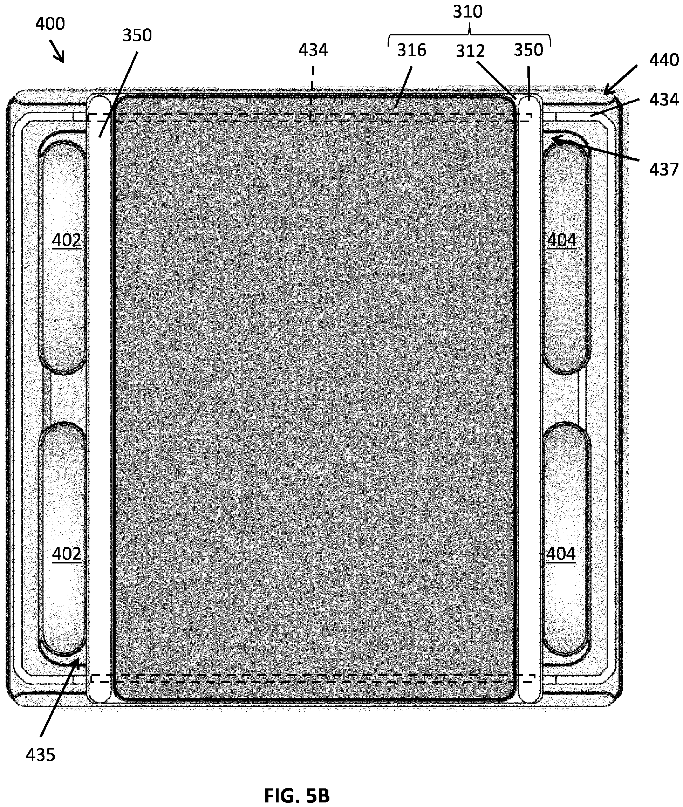

FIG. 5A is a cross sectional view of the fuel cell column 300, including interconnects 400 of FIGS. 4A-4E and electrochemical cells (e.g., fuel cells) 310. The cross sectional view is taken perpendicular to the fuel channels 418, according to various embodiments of the present disclosure. FIG. 5B is a top view showing the overlap of a fuel cell 310 and seal 434 on the fuel side of an interconnect 400 of FIG. 5A.

Referring to FIGS. 4A-5B, when assembled in a fuel cell stack or column 300, the fuel cells 310 are disposed between the interconnects 400, such that the cathode 316 and the anode 314 of each fuel cell 310 face the respective air flow field 420 and the fuel flow field 430 of each interconnect 400. An optional ceramic electrolyte reinforcement layer 350 may be located on edge portions of the fuel cell 310 electrolyte 312 on opposite sides of the cathode 316.

The fuel column 300 and/or components thereof may be conditioned and/or sintered. "Sintering" includes processes for heating, melting and/or reflowing a glass or glass-ceramic seal precursor materials to form seals in a fuel cell stack or columns, which may be performed at elevated temperature (e.g., 600-1000°C) in air/inert gas. "Conditioning" includes processes for reducing a metal oxide (e.g., nickel oxide) in an anode electrode to a metal (e.g., nickel) in a cermet electrode (e.g., nickel and a ceramic material, such as a stabilized zirconia or doped ceria) and/or heating the column 300 during performance characterization/testing, and may be performed at elevated temperature (e.g., 750-900°C) while fuel flows through the stack. The sintering and conditioning of the cell column 300 may be performed during the same thermal cycle (i.e., without cooling the stack to room temperature between sintering and conditioning).

During such high-temperature operations, the perimeter seals 434 may be forced to flow beyond the perimeter of the perimeter seal surface 432. For example, the perimeter seal material may flow down the outer surface of column and may block the openings of adjacent air channels. In severe cases, these issues can increase the pressure drop of air flow or even render the conventional column unusable.

In various embodiments, the seal gutters 440 may be configured to capture seal material that overflows the perimeter seal surface 432. In particular, the surface of the seal gutters 440 is recessed with respect to the surface of the perimeter seal surface 432, in order to provide additional space to accommodate overflow of the perimeter seal 434. For example, the seal gutters 440 may be recessed by from about 50 µm to about 3000 µm, such as from about 100 µm to about 2000 µm, with respect to a plane of the riser seal surface 432. As such, the seal gutters 440 may broaden the processing window when forming the perimeter seals 434, by allowing a larger amount of seal material to be used to form the perimeter seals 434, which may improve the sealing properties of the perimeter seals 434. In other words, the amount of seal material may be increased, since seal overflow is contained by the seal gutters 440.

The enlarged openings 408O of the air channels 408 that are formed by the recessed the second ribs 406B may also be configured to prevent any excess (e.g., overflowed) seal material from blocking the air channels 408. In addition, the increased airflow provided by the enlarged openings 408O may also increase the thermal uniformity of the interconnects during column operation, by increasing air flow.

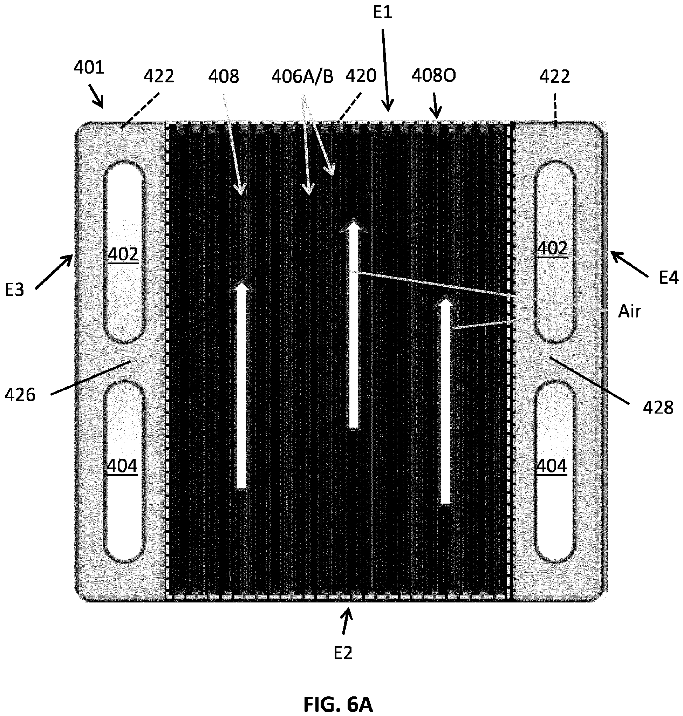

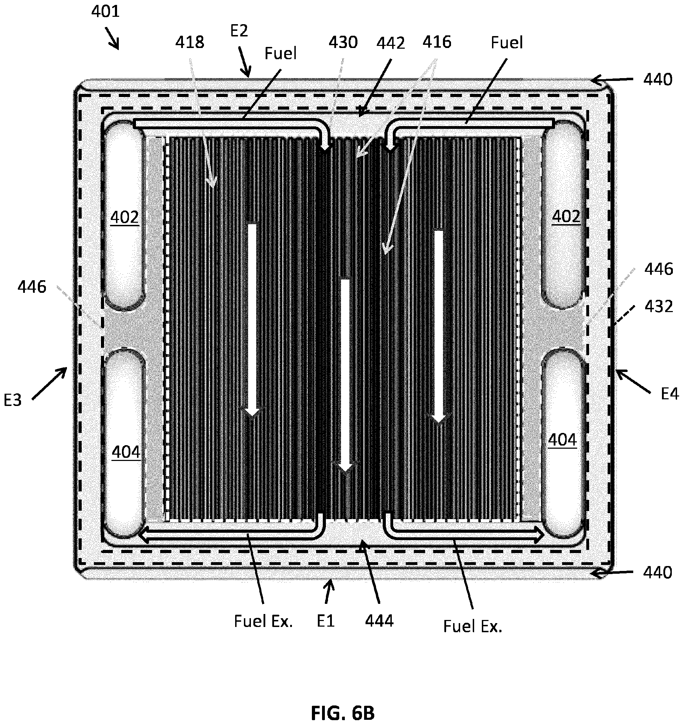

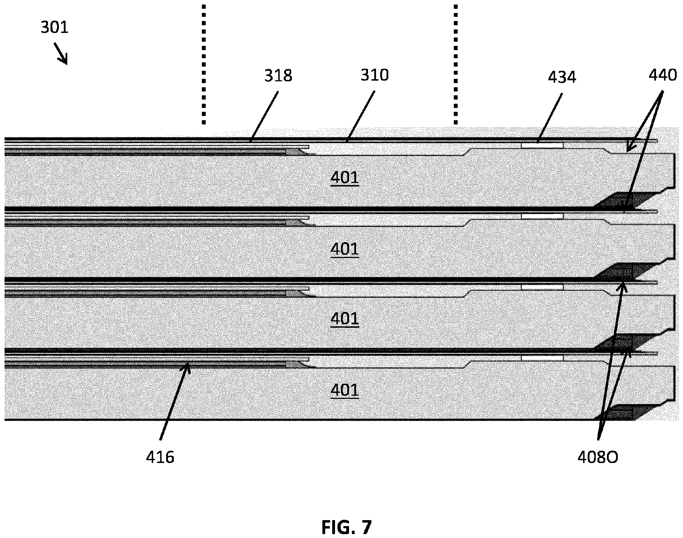

FIG. 6A is an air side view of an alternative counterflow interconnect 401, according to various embodiments of the present disclosure, and FIG. 6B is a fuel side view of the interconnect 401 of FIG. 6A. FIG. 7 is a cross sectional view of an electrochemical cell column 301 including interconnects 401 of FIGS. 6A and 6B. The interconnects 401 and column 301 may be similar to the interconnects 400 and column 300 described above. As such, only the differences there between will be discussed in detail.

Referring to FIGS. 6A, 6B, and 7, unlike the interconnect 400, fuel and air flow across the interconnect 401 in opposite directions, as shown by the arrows in FIGS. 6A and 6B. As such, the interconnect 401 may be referred to as a counterflow interconnect design. The air side of the interconnect 401 may include the air side ribs 406 including the first and second ribs 406A, 406B. Air channels 408 include enlarged openings 408O. A fuel inlet 402 and a fuel outlet 404 pair may be formed in each riser seal region 422, such that the column 301 may be internally manifolded for fuel. In particular, a first pair of a fuel inlet 402 and a fuel outlet 404 may be disposed adjacent to the third side E3 of the interconnect 401. A second pair of a fuel inlet 402 and a fuel outlet 404 may be disposed adjacent to the fourth side E4 of the interconnect 401, which is opposite to the third side E3. Thus, each fuel inlet 402 and fuel outlet 404 pair are located on the same side of the interconnect 401.

Referring to FIG. 6B, the fuel side of the interconnect 401 may include a fuel inlet plenum 442 that extends between the fuel inlets 402 on opposite third and four sides E3, E4 of the interconnect 401. The fuel side of the interconnect 401 may include a fuel outlet plenum 444 that extends between the fuel outlets 404 on opposite third and four sides E3, E4 of the interconnect 401. The fuel inlet plenum 442 extends parallel to the fuel outlet plenum 444 and perpendicular to the fuel channels 418. The fuel inlet plenum 442 may be located adjacent to and extend parallel to the second side E2 of the interconnect 401. The fuel outlet plenum 444 may be located adjacent to and parallel to the first side E1 of the interconnect 401 which is opposite to the second side E2.

The surfaces of the fuel inlet plenum 442 and the fuel outlet plenum 444 may be recessed with respect to the perimeter seal surface 432. The fuel inlet plenum 442 may be configured to provide fuel output from the fuel inlets 402 to the fuel channels 418, and the fuel outlet plenum 444 may be configured to provide anode exhaust received from the fuel channels 418 to the fuel outlets 404, as shown in FIG. 6B. In one embodiment, the fuel channels 418 extend in a straight line in the first direction between the fuel inlet plenum 442 and the fuel outlet plenum 444.

The interconnect 401 may include fuel barriers 446 disposed between the fuel channels 418 and the fuel inlets and outlets 402, 404. The fuel barriers 446 may also extend into the bridge portions 426, 428 of the interconnect 401 located between the fuel inlets 402 and the adjacent fuel outlets 404 of each pair of fuel inlets and fuel outlets. The surfaces of the fuel barriers 446 may be coplanar with a plane that extends across the tops of the ribs 416 and may be configured to operate as a barrier to prevent mixing of the fuel (i.e., fuel inlet stream) and fuel exhaust, and to prevent the fuel and the fuel exhaust from laterally entering or exiting the fuel flow field 430 without passing through the respective plenums 442, 444.

In various embodiments, the cross-sectional area of the fuel channels 418 may increase as distance from the closest fuel inlet 402 increases. In other words, each of the central fuel channels 418 that extend through a central portion of the fuel flow field 430 may have larger cross-sectional areas than each of the peripheral fuel channels 418 that extend through peripheral portions of the fuel flow field 430 adjacent to the inlets and outlets 402, 404.

The cross-sectional variation of the fuel channels 418 may beneficially improve fuel distribution through the fuel channels 418. In addition, when the column 301 is located in a fuel cell system, an inner surface of the column 301, including the second sides E2 of the interconnects 401, may be disposed adjacent to heat generating system components, such as an anode tail gas oxidizer (ATO). As such, the relatively cool fuel flowing through the inlet plenum 442 may counteract the additional heating of the column 301 by the heat generating system components, thereby improving column temperature uniformity.

Various embodiments of the present disclosure provide fuel cell systems that include interconnects disposed in cell columns that are internally manifolded for fuel. The interconnects include various features that increase interconnect manufacturing yields and robustness. The interconnects may also include features that increase cell column fuel and air flow uniformity and enlarge seal processing tolerances.

While solid oxide fuel cell interconnects, end plates, and electrolytes are described above in various embodiments, embodiments can include any other fuel cell or electrolyzer interconnects or end plates, such as molten carbonate, phosphoric acid or PEM fuel cell or electrolyzer electrolytes, interconnects or end plates.

Fuel cell systems of the embodiments of the present disclosure are designed to reduce greenhouse gas emissions and have a positive impact on the climate.

The preceding description of the disclosed aspects is provided to enable any person skilled in the art to make or use the present invention. Various modifications to these aspects will be readily apparent to those skilled in the art, and the generic principles defined herein may be applied to other aspects without departing from the scope of the invention. Thus, the present invention is not intended to be limited to the aspects shown herein but is to be accorded the widest scope consistent with the principles and novel features disclosed herein.

**The invention also refers to the following embodiments, wherein the term "claim" means "embodiment":**
1. An interconnect for an electrochemical cell column, comprising:
   an air side and an opposing fuel side;
   opposing first and second peripheral edges;
   opposing third and fourth peripheral edges;
   fuel inlets that extend through the interconnect from the air side to the fuel side;
   fuel outlets that extend through the interconnect from the air side to the fuel side;
   a fuel flow field located on the fuel side; and
   an air flow field located on the air side, the air flow field comprising:
      first ribs that extend in a first direction, from the first peripheral edge to the second peripheral edge;
      second ribs that are located between the first ribs and that have opposing ends that are recessed from the first and second peripheral edges, such that a length of the second ribs is less than a length of the first ribs; and
      air channels that are at least partially defined by the first and second ribs.
2. The interconnect of claim 1, wherein the first ribs and the second ribs extend in a straight line only in the first direction, and the second ribs are recessed from the first and second peripheral edges by a distance ranging from about 0.25 mm to about 2 mm.
3. The interconnect of claim 1, wherein:
   the fuel inlets are elongated and comprise opposing first and second shorter semicircular sides and opposing third and fourth straight sides; and
   the fuel outlets are elongated and comprise opposing first and second shorter semicircular sides and opposing third and fourth straight sides.
4. The interconnect of claim 1, wherein:
   a minimum distance between each of the fuel inlets and a respective adjacent one of the first and second peripheral edges ranges from about 6 mm to about 9 mm;
   a minimum distance between each of the fuel outlets and a respective adjacent one of the first and second peripheral edges ranges from about 6 mm to about 9 mm;
   a minimum distance between the fuel inlets ranges from about 6 mm to about 9 mm; and
   a minimum distance between the fuel outlets ranges from about 6 mm to about 9 mm.
5. The interconnect of claim 1, further comprising recessed seal gutters that are located on the fuel side, extend along the first and second peripheral edges, and are configured to receive overflow seal material.
6. The interconnect of claim 1, wherein:
   the interconnect comprises a crossflow interconnect;
   the fuel inlets are located adjacent to the third peripheral edge;
   the fuel outlets are located adjacent to the fourth peripheral edge;
   riser seal surfaces are located on the air side on opposing sides of the air flow field and surround the fuel inlets and the fuel outlets;
   the fuel flow field comprises fuel channels that extend between the fuel inlets and the fuel outlets in a second direction substantially perpendicular to the first direction; and
   a perimeter seal surface is located on the fuel side and surrounds the fuel flow field and the fuel inlets and the fuel outlets.
7. The interconnect of claim 6, further comprising:
   central plenums that are located on the fuel side between the fuel inlets and between the fuel outlets, wherein surfaces of the central plenums are coplanar with the bottom surfaces of the fuel channels; and
   corner plenums that are located on the fuel side and extend from corners of the fuel flow field to adjacent to the fuel inlets or to the fuel outlets, wherein surfaces of the corner plenums are coplanar with bottom surfaces of the fuel channels.
8. The interconnect of claim 1, wherein:
   the interconnect comprises a counterflow interconnect;
   the fuel inlets and the fuel outlets comprise a first pair of a first fuel inlet and a first fuel outlet that are located adjacent to the third peripheral edge, and a second pair of a second fuel inlet and a second fuel outlet that are located adjacent to the fourth peripheral edge;
   riser seal surfaces are located on the air side on opposing sides of the air flow field and surround the fuel inlets and the fuel outlets;
   the fuel flow field comprises fuel channels that extend between the fuel inlets and the fuel outlets in the first direction;
   a perimeter seal surface is located on the fuel side and surrounds the fuel flow field and the fuel inlets and the fuel outlets;
   a fuel inlet plenum that is located on the fuel side adjacent to the second peripheral edge, extends in a second direction perpendicular to the first direction, and fluidly connects the fuel inlets to the fuel channels; and
   a fuel outlet plenum that is located on the fuel side adjacent to the first peripheral edge, extends in the second direction, and fluidly connects the fuel outlets to the fuel channels.
9. The interconnect of claim 8, further comprising:
   a first fuel barrier located between the first fuel inlet and the first fuel outlet, and between a first side of the fuel flow field and the first pair of the first fuel inlet and the first fuel outlet; and
   a second fuel barrier located between the second fuel inlet and the second fuel outlet, and between a second side of the fuel flow field and the second pair of the second fuel inlet and the second fuel outlet,
   wherein the first and the second fuel barriers are configured to prevent fuel from flowing across the first and second sides of the fuel flow field, and to prevent the fuel from flowing from the fuel inlets to the fuel outlets without first flowing through the fuel flow field.
10. The interconnect of claim 8, wherein the fuel channels comprise:
   central fuel channels that extend through a central portion of the fuel flow field; and
   peripheral fuel channels that extend through peripheral portions of the fuel flow field,
   wherein each of the central fuel channels has a larger cross-sectional area than each of the peripheral fuel channels.
11. An electrochemical cell stack, comprising:
   interconnects of claim 1 stacked on one another; and
   electrochemical cells comprising fuel cells or electrolyzer cells located between the interconnects.
12. An interconnect for an electrochemical cell column, comprising:
   an air side and an opposing fuel side;
   opposing first and second peripheral edges;
   opposing third and fourth peripheral edges;
   fuel inlets that extend through the interconnect from the air side to the fuel side;
   fuel outlets that extend through the interconnect from the air side to the fuel side;
   a fuel flow field located on the fuel side;
   an air flow field located on the air side;
   riser seal surfaces that are located on the air side on opposing sides of the air flow field and surround the fuel inlets and the fuel outlets;
   a perimeter seal surface that is located on the fuel side and surrounds the fuel flow field and the fuel inlets and the fuel outlets; and
   seal gutters that are located on the fuel side, extend along the first and second peripheral edges, and configured to receive overflow seal material;
   wherein:
      the perimeter seal surface is located between the fuel flow field and the seal gutters; and
      the seal gutters are recessed relative to the perimeter seal surface.
13. The interconnect of claim 12, wherein:
   the fuel inlets are elongated and comprise opposing first and second shorter semicircular sides and opposing third and fourth straight sides; and
   the fuel outlets are elongated and comprise opposing first and second shorter semicircular sides and opposing third and fourth straight sides.
14. The interconnect of claim 12, wherein:
   a minimum distance between each of the fuel inlets and a respective adjacent one of the first and second peripheral edges ranges from about 6 mm to about 9 mm;
   a minimum distance between each of the fuel outlets and a respective adjacent one of the first and second peripheral edges ranges from about 6 mm to about 9 mm;
   a minimum distance between the fuel inlets ranges from about 6 mm to about 9 mm; and
   a minimum distance between the fuel outlets ranges from about 6 mm to about 9 mm.
15. The interconnect of claim 12, wherein the air flow field comprises:
   first ribs that extend in a first direction, from the first peripheral edge to the second peripheral edge;
   second ribs that are located between the first ribs and that have opposing ends that are recessed from the first and second peripheral edges, such that a length of the second ribs is less than a length of the first ribs; and
   air channels that are at least partially defined by the first and second ribs.
16. The interconnect of claim 12, wherein:
   the interconnect comprises a crossflow interconnect;
   the fuel inlets are located adjacent to the third peripheral edge;
   the fuel outlets are located adjacent to the fourth peripheral edge;
   the fuel flow field comprises fuel channels that extend between the fuel inlets and the fuel outlets in a second direction substantially perpendicular to the first direction;
   central plenums are located on the fuel side between the fuel inlets and between the fuel outlets, wherein surfaces of the central plenums are coplanar with the bottom surfaces of the fuel channels; and
   corner plenums are located on the fuel side and extend from corners of the fuel flow field to adjacent to the fuel inlets or to the fuel outlets, wherein surfaces of the corner plenums are coplanar with bottom surfaces of the fuel channels.
17. The interconnect of claim 12, wherein:
   the interconnect comprises a counterflow interconnect;
   the fuel inlets and the fuel outlets comprise a first pair of a first fuel inlet and a first fuel outlet that are located adjacent to the third peripheral edge, and a second pair of a second fuel inlet and a second fuel outlet that are located adjacent to the fourth peripheral edge;
   the fuel flow field comprises fuel channels that extend between the fuel inlets and the fuel outlets in the first direction;
   a fuel inlet plenum is located on the fuel side adjacent to the second peripheral edge, extends in a second direction perpendicular to the first direction, and fluidly connects the fuel inlets to the fuel channels;
   a fuel outlet plenum is located on the fuel side adjacent to the first peripheral edge, extends in the second direction, and fluidly connects the fuel outlets to the fuel channels;
   a first fuel barrier is located between the first fuel inlet and the first fuel outlet, and between a first side of the fuel flow field and the first pair of the first fuel inlet and the first fuel outlet;
   a second fuel barrier is located between the second fuel inlet and the second fuel outlet, and between a second side of the fuel flow field and the second pair of the second fuel inlet and the second fuel outlet; and
   the first and the second fuel barriers are configured to prevent fuel from flowing across the first and second sides of the fuel flow field, and to prevent the fuel from flowing from the fuel inlets to the fuel outlets without first flowing through the fuel flow field.
18. An electrochemical cell stack, comprising:
   interconnects of claim 12 stacked on one another; and
   electrochemical cells comprising fuel cells or electrolyzer cells located between the interconnects.
19. An interconnect for an electrochemical cell column, comprising:
   an air side and an opposing fuel side;
   opposing first and second peripheral edges;
   opposing third and fourth peripheral edges;
   fuel inlets and fuel outlets that extend through the interconnect from the air side to the fuel side, wherein the fuel inlets and the fuel outlets comprise a first pair of a first fuel inlet and a first fuel outlet that are located adjacent to the third peripheral edge, and a second pair of a second fuel inlet and a second fuel outlet that are located adjacent to the fourth peripheral edge;
   an air flow field located on the air side and comprising air channels which extend in a first direction;
   a fuel flow field located on the fuel side and comprising fuel channels which extend in the first direction;
   a fuel inlet plenum that is located on the fuel side adjacent to the second peripheral edge, extends in a second direction perpendicular to the first direction, and fluidly connects the fuel inlets to the fuel channels; and
   a fuel outlet plenum that is located on the fuel side adjacent to the first peripheral edge, extends in the second direction, and fluidly connects the fuel outlets to the fuel channels.
20. The interconnect of claim 19, further comprising:
   a first fuel barrier located between the first fuel inlet and the first fuel outlet, and between a first side of the fuel flow field and the first pair of the first fuel inlet and the first fuel outlet; and
   a second fuel barrier located between the second fuel inlet and the second fuel outlet, and between a second side of the fuel flow field and the second pair of the second fuel inlet and the second fuel outlet,
   wherein the first and the second fuel barriers are configured to prevent fuel from flowing across the first and second sides of the fuel flow field, and to prevent the fuel from flowing from the fuel inlets to the fuel outlets without first flowing through the fuel flow field; and
   the fuel channels extend in a straight line only in the first direction between the fuel inlet plenum and the fuel outlet plenum.
21. An electrochemical cell stack, comprising:
   interconnects of claim 19 stacked on one another; and
   electrochemical cells comprising fuel cells or electrolyzer cells located between the interconnects.

## Claims

1. An interconnect for an electrochemical cell column, comprising:
an air side and an opposing fuel side;
opposing first and second peripheral edges;
opposing third and fourth peripheral edges;
fuel inlets that extend through the interconnect from the air side to the fuel side;
fuel outlets that extend through the interconnect from the air side to the fuel side;
a fuel flow field located on the fuel side;
an air flow field located on the air side;
riser seal surfaces that are located on the air side on opposing sides of the air flow field and surround the fuel inlets and the fuel outlets;
a perimeter seal surface that is located on the fuel side and surrounds the fuel flow field and the fuel inlets and the fuel outlets; and
seal gutters that are located on the fuel side, extend along the first and second peripheral edges, and configured to receive overflow seal material;
wherein:
the perimeter seal surface is located between the fuel flow field and the seal gutters; and
the seal gutters are recessed relative to the perimeter seal surface.

2. The interconnect of claim 1, wherein:
the fuel inlets are elongated and comprise opposing first and second shorter semicircular sides and opposing third and fourth straight sides; and
the fuel outlets are elongated and comprise opposing first and second shorter semicircular sides and opposing third and fourth straight sides.

3. The interconnect of claim 1, wherein:
a minimum distance between each of the fuel inlets and a respective adjacent one of the first and second peripheral edges ranges from about 6 mm to about 9 mm;
a minimum distance between each of the fuel outlets and a respective adjacent one of the first and second peripheral edges ranges from about 6 mm to about 9 mm;
a minimum distance between the fuel inlets ranges from about 6 mm to about 9 mm; and
a minimum distance between the fuel outlets ranges from about 6 mm to about 9 mm.

4. The interconnect of claim 1, wherein the air flow field comprises:
first ribs that extend in a first direction, from the first peripheral edge to the second peripheral edge;
second ribs that are located between the first ribs and that have opposing ends that are recessed from the first and second peripheral edges, such that a length of the second ribs is less than a length of the first ribs; and
air channels that are at least partially defined by the first and second ribs.

5. The interconnect of claim 4, wherein the first ribs and the second ribs extend in a straight line only in the first direction, and the second ribs are recessed from the first and second peripheral edges by a distance ranging from about 0.25 mm to about 2 mm.

6. The interconnect of claim 1, wherein:
the interconnect comprises a crossflow interconnect;
the fuel inlets are located adjacent to the third peripheral edge;
the fuel outlets are located adjacent to the fourth peripheral edge; and
the fuel flow field comprises fuel channels that extend between the fuel inlets and the fuel outlets in a second direction substantially perpendicular to the first direction.

7. The interconnect of claim 6, further comprising:
central plenums located on the fuel side between the fuel inlets and between the fuel outlets, wherein surfaces of the central plenums are coplanar with the bottom surfaces of the fuel channels; and
corner plenums located on the fuel side and extend from corners of the fuel flow field to adjacent to the fuel inlets or to the fuel outlets, wherein surfaces of the corner plenums are coplanar with bottom surfaces of the fuel channels.

8. The interconnect of claim 1, wherein:
the interconnect comprises a counterflow interconnect;
the fuel inlets and the fuel outlets comprise a first pair of a first fuel inlet and a first fuel outlet that are located adjacent to the third peripheral edge, and a second pair of a second fuel inlet and a second fuel outlet that are located adjacent to the fourth peripheral edge;
the fuel flow field comprises fuel channels that extend between the fuel inlets and the fuel outlets in the first direction;
a fuel inlet plenum is located on the fuel side adjacent to the second peripheral edge, extends in a second direction perpendicular to the first direction, and fluidly connects the fuel inlets to the fuel channels; and
a fuel outlet plenum is located on the fuel side adjacent to the first peripheral edge, extends in the second direction, and fluidly connects the fuel outlets to the fuel channels.

9. The interconnect of claim 8, further comprising:
a first fuel barrier located between the first fuel inlet and the first fuel outlet, and between a first side of the fuel flow field and the first pair of the first fuel inlet and the first fuel outlet; and
a second fuel barrier located between the second fuel inlet and the second fuel outlet, and between a second side of the fuel flow field and the second pair of the second fuel inlet and the second fuel outlet, wherein:
the first and the second fuel barriers are configured to prevent fuel from flowing across the first and second sides of the fuel flow field, and to prevent the fuel from flowing from the fuel inlets to the fuel outlets without first flowing through the fuel flow field.

10. An electrochemical cell stack, comprising:
interconnects of claim 1 stacked on one another; and
electrochemical cells comprising fuel cells or electrolyzer cells located between the interconnects.

11. The electrochemical cell stack of claim 10, further comprising a glass or a glass-ceramic seal located on the perimeter seal surface and in the seal gutters.

12. The electrochemical cell stack of claim 10, wherein the electrochemical cells comprise solid oxide fuel cells.

13. The electrochemical cell stack of claim 10, wherein the electrochemical cells comprise solid oxide electrolyzer cells.

14. A method of forming an electrochemical cell stack, comprising:
placing the interconnect of claim 1 into the electrochemical cell stack;
providing a glass or a glass-ceramic seal precursor material on the perimeter seal surface;
placing additional interconnects and electrochemical cells comprising fuel cells or electrolyzer cells located between the additional interconnects over the glass or glass-ceramic seal precursor material into the electrochemical cell stack; and
sintering the electrochemical cell stack such that the glass or a glass-ceramic seal precursor material squishes out laterally from the perimeter seal surface into the seal gutters.

15. The method of claim 14, wherein a glass or a glass-ceramic seal is located on the perimeter seal surface and in the seal gutters after the step of sintering.
